# EUROPEAN PATENT APPLICATION

(11) **EP 4 366 139 A1**
(43) Date of publication of application: **08.05.2024**
(21) Application number: 21948398.9
(22) Date of filing: 01.07.2021
(51) Int. Cl.: H02K 3/34

(54) **ROTATING ELECTRIC MACHINE**

(71) Applicant: DMG Mori Co., Ltd., Yamatokoriyama-shi, Nara 639-1160 (JP)
(72) Inventor: MORIMOTO, Ryota, Yamatokoriyama-shi, Nara 639-1160 (JP)
(74) Representative: Isarpatent
(86) International application number: PCT/JP2021/024892
(87) International publication number: WO 2023/276094

(57) **Abstract**

A motor includes: a stator core (21) including a plurality of tooth portions (23), the stator core (21) being provided with a slot (24) between the tooth portions (23) adjacent to each other; three-phase coils including a first coil end and a second coil end arranged adjacently to each other on an end face (26) of the stator core (21), and formed of coils of different phases, the three-phase coils being inserted through the slot (24) and wound around each of the tooth portions (23); a first insulator (48) arranged in the slot (24), protruding from the slot (24) onto the end face (26) of the stator core (21), and partitioning a space in the slot (24) into an inner-circumferential-side space (61) and an outer-circumferential-side space (62), the outer-circumferential-side space (62) being located on a radially outer side of the stator core (21) relative to the inner-circumferential-side space (61); and a second insulator (51) interposed between the first coil end and the second coil end, and provided to partially overlap with the first insulator (48) when viewed in a radial direction of the stator core (21).

## Description

### TECHNICAL FIELD

The present invention relates to a rotating electric machine.

### BACKGROUND ART

For example, Japanese Patent Laying-Open No. 2004-112974 (PTL 1) discloses an electric motor including a stator iron core, a coil end drawn out from a slot of the stator iron core, and an interphase insulating paper that provides insulation of a root of the coil end.

### CITATION LIST

### PATENT LITERATURE

PTL 1: Japanese Patent Laying-Open No. 2004-112974

### SUMMARY OF INVENTION

### TECHNICAL PROBLEM

As disclosed in PTL 1 above, there is known a configuration in which an insulator such as an insulating paper is used to provide insulation between coil ends of different phases. However, the coil ends of different phases are routed such that the coil ends are close to each other on an end face of a stator core. Therefore, in mounting of the insulator to the coil ends, the insulator is not inserted to an appropriate position between the coil ends and reliable insulation cannot be achieved in some cases.

Accordingly, an object of the present invention is to solve the above-described problem and provide a rotating electric machine that allows reliable insulation between coil ends of different phases.

### SOLUTION TO PROBLEM

A rotating electric machine according to the present invention includes: a stator core including a yoke portion having an annular shape, and a plurality of tooth portions extending radially from the yoke portion and provided at a distance from each other in a circumferential direction, the stator core being provided with a slot between the tooth portions adjacent to each other; three-phase coils including a first coil end and a second coil end arranged adjacently to each other on an end face of the stator core in an axial direction of the stator core, and formed of coils of different phases, the three-phase coils being inserted through the slot and wound around each of the tooth portions; a first insulator arranged in the slot, protruding from the slot onto the end face of the stator core, and partitioning a space in the slot into an inner-circumferential-side space and an outer-circumferential-side space, the inner-circumferential-side space being a space where a first coil of the three-phase coils is arranged, the outer-circumferential-side space being a space where a second coil of the three-phase coils wound around the tooth portion at a position displaced from the first coil in the circumferential direction is arranged, the outer-circumferential-side space being located on a radially outer side of the stator core relative to the inner-circumferential-side space; and a second insulator interposed between the first coil end and the second coil end, and provided to partially overlap with the first insulator when viewed in a radial direction of the stator core.

According to the rotating electric machine configured as described above, the second insulator is provided to partially overlap with the first insulator when viewed in the radial direction of the stator core. Therefore, reliable insulation between the first coil end and the second coil end formed of coils of different phases can be provided.

Preferably, each of the first coil end and the second coil end includes a root portion arranged directly on an opening formed in the end face of the stator core by the slot. The rotating electric machine further includes a third insulator that covers the root portion. A length of the first insulator in the axial direction of the stator core on the end face of the stator core is longer than a length of the third insulator in the axial direction of the stator core on the end face of the stator core.

According to the rotating electric machine configured as described above, it becomes easier to provide the second insulator to partially overlap with the first insulator when viewed in the radial direction of the stator core. Therefore, the operability when arranging the second insulator between the first coil end and the second coil end can be improved.

Preferably, the second insulator is made of an insulating paper.

According to the rotating electric machine configured as described above, even when the second insulator is made of an insulating paper that tends to be deformed when the second insulator is arranged between the first coil end and the second coil end, reliable insulation between the first coil end and the second coil end can be provided.

Preferably, each of the first coil end and the second coil end extends in the circumferential direction and the radial direction of the stator core when viewed in the axial direction of the stator core.

According to the rotating electric machine configured as described above, even when the section where the first coil end and the second coil end are adjacent to each other is long, which makes it difficult to arrange the second insulator between the first coil end and the second coil end, reliable insulation between the first coil end and the second coil end can be provided.

### ADVANTAGEOUS EFFECTS OF INVENTION

As described above, according to the present invention, there can be provided a rotating electric machine that allows reliable insulation between coil ends of different phases.

### BRIEF DESCRIPTION OF DRAWINGS

Fig. 1 is a perspective view showing a motor according to an embodiment of the present invention.
Fig. 2 is a cross-sectional view showing the motor shown in Fig. 1.
Fig. 3 is a perspective view showing the motor shown in Fig. 1 from which a flange, a resin sealing portion, and wires have been removed.
Fig. 4 is a perspective view for illustrating arrangement of insulators in the motor shown in Fig. 1.
Fig. 5 is a perspective view showing the motor in a region surrounded by a two-dot chain line V in Fig. 4.
Fig. 6 is a perspective view showing the motor when viewed in a direction indicated by an arrow line VI-VI in Fig. 5.
Fig. 7 is a diagram for illustrating a state in which coils are mounted in the motor shown in Fig. 1.
Fig. 8 is a diagram for illustrating arrangement of a second insulator in the motor shown in Fig. 1.
Fig. 9 is a perspective view showing the motor when viewed in a direction indicated by an arrow IX in Fig. 8.
Fig. 10 is a perspective view showing the motor when viewed in the direction indicated by arrow IX in Fig. 8.
Fig. 11 is a cross-sectional view showing the motor when viewed in a direction indicated by an arrow line XI-XI in Fig. 7.
Fig. 12 schematically shows an insulation state between a first coil end and a second coil end in the motor shown in Fig. 1.
Fig. 13 schematically shows an insulation state between a first coil end and a second coil end in a motor according to a comparative example.

### DESCRIPTION OF EMBODIMENTS

An embodiment of the present invention will be described with reference to the drawings. In the drawings referred to below, the same or corresponding members are denoted by the same reference numerals.

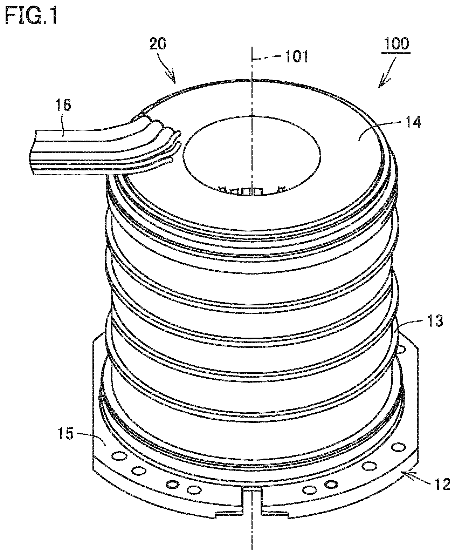

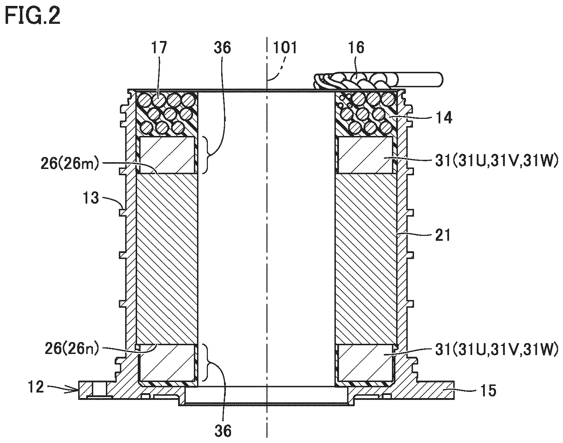

Fig. 1 is a perspective view showing a motor according to an embodiment of the present invention. Fig. 2 is a cross-sectional view showing the motor shown in Fig. 1.

Referring to Figs. 1 and 2, a motor 100 according to the present embodiment is used for a machine tool. Motor 100 is used as a motor incorporated in a workpiece spindle and for rotating a workpiece held by the workpiece spindle.

Motor 100 includes a rotor (not shown) and a stator 20 disposed on the outer circumference of the rotor with a gap interposed therebetween. The rotor is driven to rotate about a central axis 101 shown as an imaginary line.

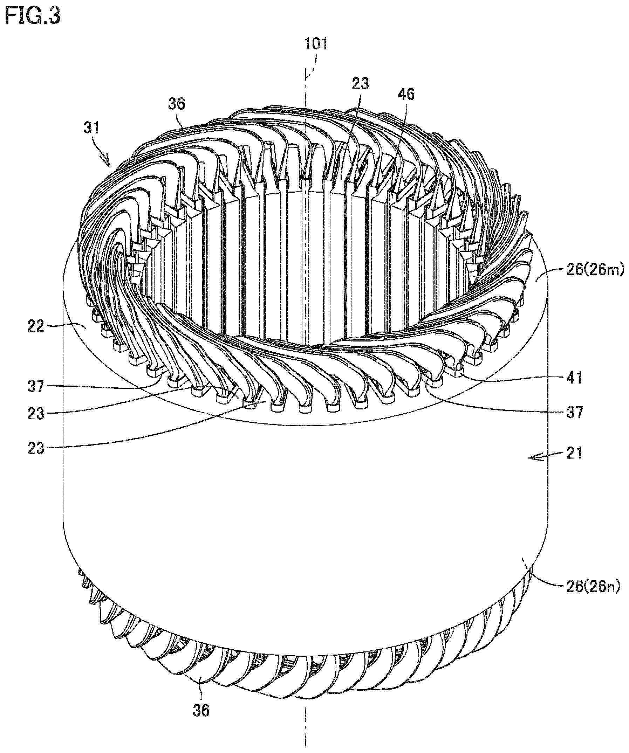

Fig. 3 is a perspective view showing the motor shown in Fig. 1 from which a flange, a resin sealing portion, and wires (lead wires 16 and crossover wires 17 in Fig. 2) have been removed.

Referring to Figs. 1 to 3, stator 20 includes a stator core 21, a flange 12, three-phase coils 31 (31U, 31V, 31W), and a resin sealing portion 14.

Stator core 21 is formed of a magnetic material. Stator core 21 entirely has a cylindrical shape centered around central axis 101. The circumferential direction of central axis 101 corresponds to the circumferential direction of stator core 21, the axial direction of central axis 101 corresponds to the axial direction of stator core 21, and the radial direction of central axis 101 corresponds to the radial direction of stator core 21. A length of stator core 21 in the axial direction of central axis 101 may be greater than a diameter of stator core 21 centered around central axis 101, or may be equal to or smaller than the diameter of stator core 21 centered around central axis 101.

Stator core 21 has end faces 26 (26m, 26n). Each end face 26 is disposed at an end of stator core 21 in the axial direction of central axis 101. End face 26 extends in a plane orthogonal to central axis 101. End face 26m and end face 26n are disposed at one end and the other end, respectively, of stator core 21 in the axial direction of central axis 101.

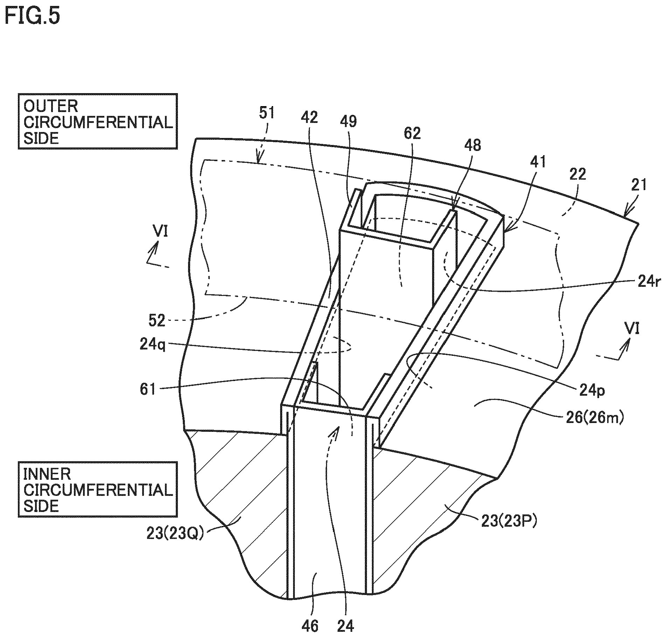

Stator core 21 is formed of components including a yoke portion 22 and a plurality of tooth portions 23. Yoke portion 22 is formed to extend in an annular shape around central axis 101. Yoke portion 22 has a cylindrical shape centered around central axis 101. Tooth portions 23 each extends radially inward of central axis 101 from yoke portion 22. Each tooth portion 23 faces the rotor with a gap interposed therebetween at the distal end of tooth portion 23 extending from yoke portion 22. The plurality of tooth portions 23 are provided at a distance from each other in the circumferential direction of central axis 101. A slot 24 (see Fig. 5 and the like described later) is provided between tooth portions 23 adjacent to each other in the circumferential direction.

Flange 12 entirely has a cylindrical shape centered around central axis 101. Flange 12 is made of metal. Stator core 21 is fitted inside flange 12.

Flange 12 is formed of components including a refrigerant passage forming portion 13 and a collar portion 15. Refrigerant passage forming portion 13 is provided on the outer circumferential surface of flange 12. Together with a cylindrical member (not shown) disposed on the outer circumference of flange 12, refrigerant passage forming portion 13 forms a refrigerant passage through which refrigerant such as cooling water or cooling oil can flow. Collar portion 15 is provided to extend in a flange shape at an end of flange 12 in the axial direction of central axis 101. Collar portion 15 is provided with a hole through which a bolt is inserted for fixing motor 100.

Three-phase coils 31 are provided in stator core 21. Three-phase coils 31 are inserted through each slot 24. Three-phase coils 31 are wound around each tooth portion 23.

Three-phase coils 31 include a U-phase coil 31U, a V-phase coil 31V, and a W-phase coil 31W. The coil of each of U-phase coil 31U, V-phase coil 31V, and W-phase coil 31W is formed of a plurality of bundled conductive wires (for example, copper wires).

The coil of each of U-phase coil 31U, V-phase coil 31V, and W-phase coil 31W is wound around tooth portion 23 by distributed winding. The coil of each of U-phase coil 31U, V-phase coil 31V, and W-phase coil 31W is provided so as to straddle at least one slot 24. The coil of each of U-phase coil 31U, V-phase coil 31V, and W-phase coil 31W is wound around tooth portions 23 so as to pass through two slots 24 located apart from each other in the circumferential direction of stator core 21 and also extend over end faces 26 (26m, 26n).

The coil of each of U-phase coil 31U, V-phase coil 31V, and W-phase coil 31W extends inside slot 24 linearly in the axial direction of central axis 101.

When viewed from the outside to the inside in the radial direction of central axis 101, the coil of each of U-phase coil 31U, V-phase coil 31V, and W-phase coil 31W extends on end face 26 so as to be curved in a substantially U-shape. When viewed in the axial direction of central axis 101, the coil (a coil end portion 36 described later) of each of U-phase coil 31U, V-phase coil 31V, and W-phase coil 31W extends on end face 26 in the circumferential direction of central axis 101 and in the radial direction of central axis 101. Inside each slot 24, two sets of coils selected from U-phase coil 31U, V-phase coil 31V, and W-phase coil 31W are arranged side by side in the radial direction of central axis 101. These two sets of coils arranged inside each slot 24 may be coils of the same phase or may be coils of different phases.

Three-phase coils 31 (31U, 31V, 31W) extending on end face 26 constitute a coil end portion 36. Coil end portion 36 protrudes from slot 24 onto end face 26 in the axial direction of central axis 101.

As shown in Fig. 3, coil end portion 36 includes a root portion 37. Root portion 37 is arranged directly on an opening formed in end face 26 of stator core 21 by slot 24. Root portion 37 extends from slot 24 in the axial direction of central axis 101.

Resin sealing portion 14 is formed of a resin material. Resin sealing portion 14 is provided so as to fill slot 24. Resin sealing portion 14 is provided on end face 26 so as to cover coil end portion 36.

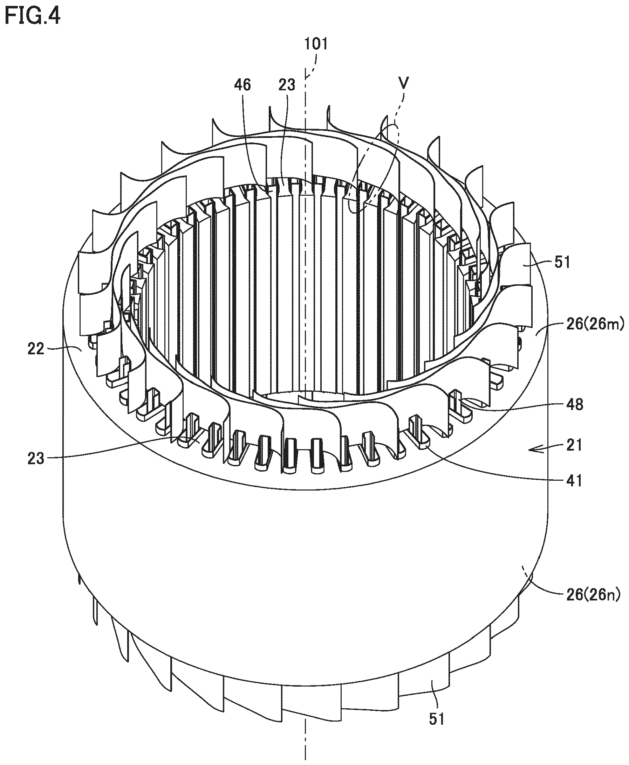

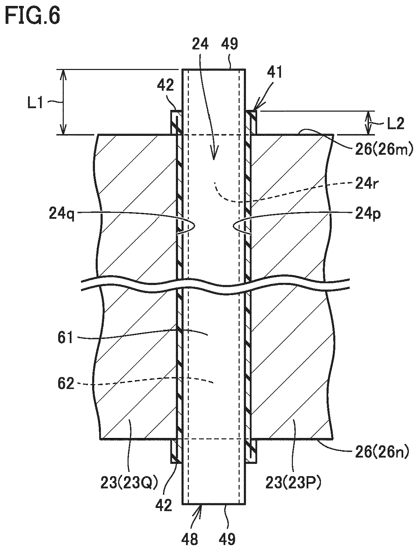

Fig. 4 is a perspective view for illustrating arrangement of insulators in the motor shown in Fig. 1. Fig. 5 is a perspective view showing the motor in a region surrounded by a two-dot chain line V in Fig. 4. Fig. 6 is a perspective view showing the motor when viewed in a direction indicated by an arrow line VI-VI in Fig. 5.

In Figs. 4 to 6, three-phase coils 31 are not shown. In Figs. 5 and 6, an arbitrary tooth portion 23P of the plurality of tooth portions 23, and a tooth portion 23Q aligned with this tooth portion 23P in the circumferential direction of central axis 101 are shown.

Referring to Figs. 4 to 6, tooth portion 23P has a first wall portion 24p. Tooth portion 23Q has a second wall portion 24q. First wall portion 24p and second wall portion 24q are formed of side surfaces of tooth portions 23 that face in the circumferential direction of central axis 101.

Yoke portion 22 has a third wall portion 24r. Third wall portion 24r is formed of an inner circumferential surface of yoke portion 22 that faces radially inward of central axis 101. One end of third wall portion 24r in the circumferential direction of central axis 101 is continuous to an end of first wall portion 24p on the radially outer side of central axis 101. The other end of third wall portion 24r in the circumferential direction of central axis 101 is continuous to an end of second wall portion 24q on the radially outer side of central axis 101.

Slot 24 is defined at a position that is between first wall portion 24p and second wall portion 24q in the circumferential direction of central axis 101 and faces third wall portion 24r in the radial direction of central axis 101.

Motor 100 further includes a first insulator 48, a second insulator 51, a third insulator 41, and a fourth insulator 46.

Each of first insulator 48, second insulator 51, third insulator 41, and fourth insulator 46 is made of a flexible sheet body. Each of first insulator 48, second insulator 51, third insulator 41, and fourth insulator 46 is made of an insulating paper.

Third insulator 41 is arranged in slot 24. Third insulator 41 is provided in slot 24 so as to cover first wall portion 24p, second wall portion 24q and third wall portion 24r. Third insulator 41 is open radially inward of central axis 101.

Third insulator 41 extends in the axial direction of central axis 101. Third insulator 41 protrudes from slot 24 onto end faces 26 (26m, 26n) of stator core 21. Third insulator 41 is provided on end face 26 so as to cover root portion 37 of coil end portion 36.

Third insulator 41 has a protruding end 42. Protruding end 42 corresponds to a tip portion of third insulator 41 protruding from slot 24 onto end face 26. Third insulator 41 is folded over by 180° at the tip portion (protruding end 42) protruding from end face 26. Third insulator 41 is double-layered on end face 26.

Third insulator 41 ensures a distance between end face 26 of stator core 21 and coil end portion 36 in the axial direction of central axis 101.

Fourth insulator 46 is arranged in slot 24. Fourth insulator 46 is provided to close an opening of third insulator 41 that is open radially inward of central axis 101. Fourth insulator 46 extends along the circumferential direction of central axis 101. Both ends of fourth insulator 46 in the circumferential direction of central axis 101 are continuous to third insulator 41 that covers first wall portion 24p and third insulator 41 that covers second wall portion 24q, respectively.

Fourth insulator 46 extends in the axial direction of central axis 101. Fourth insulator 46 protrudes from slot 24 onto end faces 26 (26m, 26n) of stator core 21. A length of fourth insulator 46 in the axial direction of central axis 101 on end face 26 of stator core 21 is equal to a length of third insulator 41 in the axial direction of central axis 101 on end face 26 of stator core 21.

On the radially inner side of central axis 101, fourth insulator 46 partitions a space in slot 24. Fourth insulator 46 prevents the coil of each of three-phase coils 31 arranged in slot 24 from jumping out radially inward of central axis 101.

First insulator 48 is arranged in slot 24. First insulator 48 partitions a space in slot 24 into an inner-circumferential-side space 61 and an outer-circumferential-side space 62. Outer-circumferential-side space 62 is located on the radially outer side of stator core 21 relative to inner-circumferential-side space 61.

Inner-circumferential-side space 61 is defined at a position that is sandwiched between third insulator 41 that covers first wall portion 24p and third insulator 41 that covers second wall portion 24q in the circumferential direction of central axis 101 and is sandwiched between fourth insulator 46 and first insulator 48 in the radial direction of central axis 101. Outer-circumferential-side space 62 is defined at a position that is sandwiched between third insulator 41 that covers first wall portion 24p and third insulator 41 that covers second wall portion 24q in the circumferential direction of central axis 101 and is sandwiched between first insulator 48 and third insulator 41 that covers third wall portion 24r in the radial direction of central axis 101.

First insulator 48 extends in the axial direction of central axis 101. First insulator 48 protrudes from slot 24 onto end faces 26 (26m, 26n) of stator core 21. First insulator 48 has a protruding end 49. Protruding end 49 corresponds to a tip portion of first insulator 48 protruding from slot 24 onto end face 26.

As shown in Fig. 6, a length (protruding length L1) of first insulator 48 in the axial direction of central axis 101 on end face 26 of stator core 21 is longer than a length (protruding length L2) of third insulator 41 in the axial direction of central axis 101 on end face 26 of stator core 21 (L1>L2). Protruding length L1 is a length between end face 26 and protruding end 49 of first insulator 48 in the axial direction of central axis 101. Protruding length L2 is a length between end face 26 and protruding end 42 of third insulator 41 in the axial direction of central axis 101.

When coils of different phases are arranged in inner-circumferential-side space 61 and outer-circumferential-side space 62, first insulator 48 provides insulation between these coils of different phases.

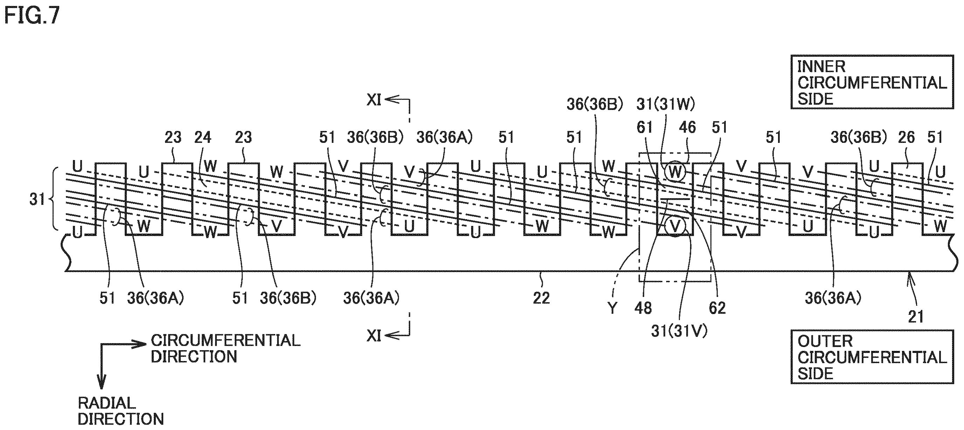

Fig. 7 is a diagram for illustrating a state in which the coils are mounted in the motor shown in Fig. 1. Fig. 7 schematically shows end face 26 of stator core 21 developed linearly and three-phase coils 31 (coil end portion 36) disposed on end face 26. In Fig. 7, U-phase coil 31U is indicated by a dotted line, V-phase coil 31V is indicated by a two-dot chain line, and W-phase coil 31W is indicated by a one-dot chain line.

Referring to Fig. 7, in the present embodiment, the coil of each of U-phase coil 31U, V-phase coil 31V, and W-phase coil 31W is provided so as to straddle four slots 24 in the circumferential direction of central axis 101. Two sets of U-phase coils 31U are arranged side by side continuously in the circumferential direction of central axis 101, two sets of V-phase coils 31V are arranged side by side continuously in the circumferential direction of central axis 101, and two sets of W-phase coils 31W are arranged side by side continuously in the circumferential direction of central axis 101. The two sets of U-phase coils 31U, the two sets of V-phase coils 31V, and the two sets of W-phase coils 31W are arranged in this order repeatedly in the circumferential direction of central axis 101.

A first coil and a second coil wound around tooth portions 23 at positions displaced from each other in the circumferential direction of central axis 101 are arranged in inner-circumferential-side space 61 and outer-circumferential-side space 62, respectively.

For example, referring to slot 24 surrounded by a two-dot chain line Y in Fig. 7, W-phase coil 31W serving as the first coil is arranged in inner-circumferential-side space 61 and V-phase coil 31V serving as the second coil is arranged in outer-circumferential-side space 62. The positions of the plurality of tooth portions 23 around which W-phase coil 31W arranged in inner-circumferential-side space 61 and V-phase coil 31V arranged in outer-circumferential-side space 62 are wound are displaced by four tooth portions 23.

A combination of the first coil arranged in inner-circumferential-side space 61 and the second coil arranged in outer-circumferential-side space 62 may be not only the coils of different phases as described above but also the coils of the same phase.

Three-phase coils 31 (coil end portion 36) includes a first coil end 36A and a second coil end 36B. First coil end 36A and second coil end 36B are formed of coils of different phases.

First coil end 36A and second coil end 36B are arranged adjacently to each other in the circumferential direction of central axis 101. First coil end 36A and second coil end 36B are alternately provided side by side in the circumferential direction of central axis 101. In the present embodiment, each of first coil end 36A and second coil end 36B is formed of a plurality of (two) sets of coils of the same phase.

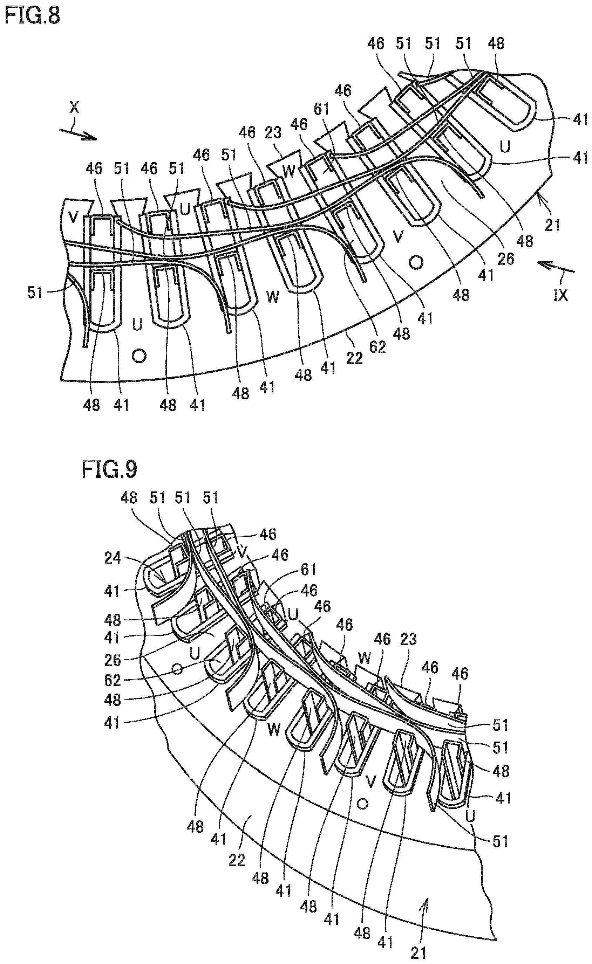

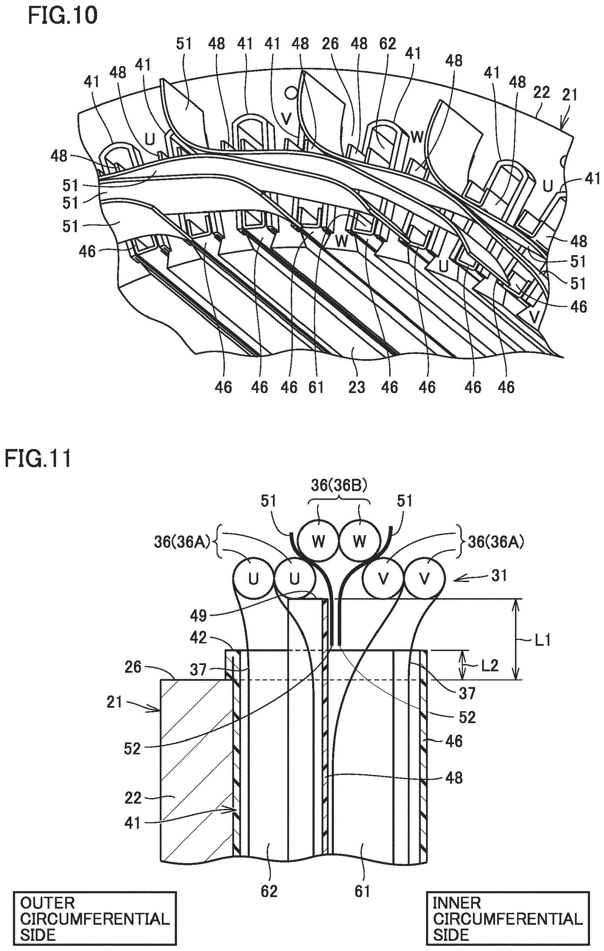

Fig. 8 is a diagram for illustrating arrangement of the second insulator in the motor shown in Fig. 1. Fig. 9 is a perspective view showing the motor when viewed in a direction indicated by an arrow IX in Fig. 8. Fig. 10 is a perspective view showing the motor when viewed in the direction indicated by arrow IX in Fig. 8. Fig. 11 is a cross-sectional view showing the motor when viewed in a direction indicated by an arrow line XI-XI in Fig. 7.

Referring to Figs. 7 to 11, second insulator 51 is provided on end face 26 of stator core 21. Second insulator 51 is interposed between first coil end 36A and second coil end 36B. Second insulator 51 extends in the circumferential direction and the radial direction of central axis 101 when viewed in the axial direction of central axis 101. Second insulator 51 extends between yoke portion 22 and the distal end of tooth portion 23 in the radial direction of central axis 101, while alternately crossing tooth portion 23 and the opening formed in end face 26 of stator core 21 by slot 24, when viewed in the axial direction of central axis 101.

Second insulator 51 provides insulation between first coil end 36A and second coil end 36B formed of coils of different phases on end face 26.

As shown in Fig. 5 and Figs. 9 to 11, second insulator 51 is provided to partially overlap with first insulator 48 when viewed in the radial direction of central axis 101. Second insulator 51 has a peripheral edge portion 52. Peripheral edge portion 52 faces end face 26 of stator core 21 in the axial direction of central axis 101. Peripheral edge portion 52 is arranged between protruding end 42 of third insulator 41 and protruding end 49 of first insulator 48 in the axial direction of central axis 101.

Second insulator 51 (peripheral edge portion 52) may be in contact with third insulator 41 (protruding end 42), or may not be in contact with third insulator 41 (protruding end 42).

A length of the overlapping of second insulator 51 and first insulator 48 in the axial direction of central axis 101 is preferably equal to or longer than a creepage distance between first coil end 36A and second coil end 36B required in design of motor 100. The length of the overlapping of second insulator 51 and first insulator 48 in the axial direction of central axis 101 is, for example, 2 mm or more.

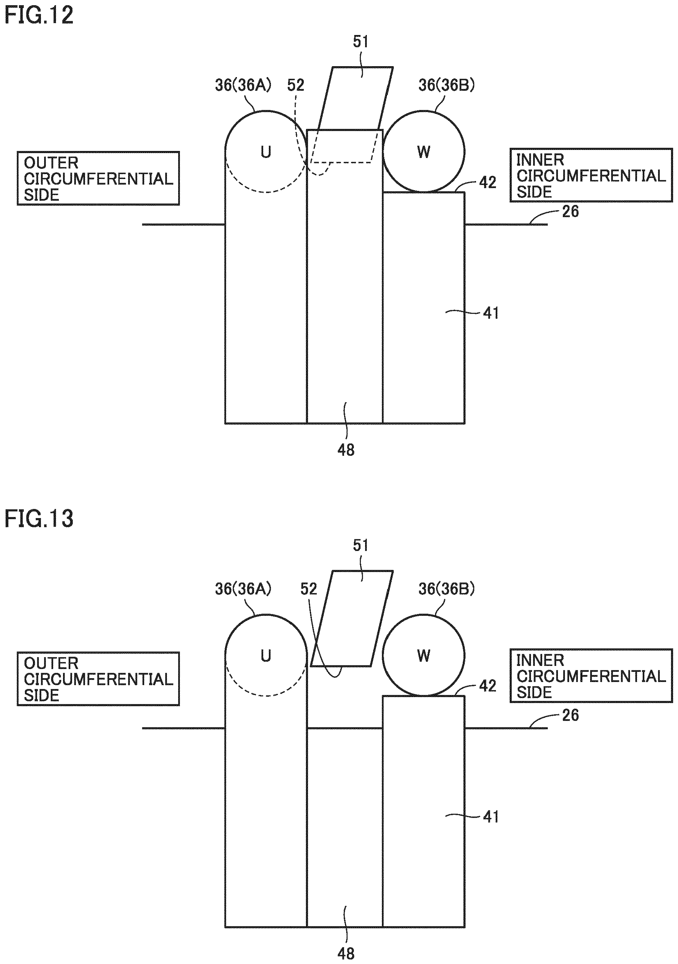

Fig. 12 schematically shows an insulation state between the first coil end and the second coil end in the motor shown in Fig. 1. Fig. 13 schematically shows an insulation state between a first coil end and a second coil end in a motor according to a comparative example.

Referring to Fig. 13, in the present comparative example, second insulator 51 (peripheral edge portion 52) is arranged at a distance from first insulator 48 in the axial direction of central axis 101. In such a configuration, in a portion of the coils rising from slot 24, second insulator 51 is not sufficiently inserted between first coil end 36A and second coil end 36B. This causes concerns, such as the occurrence of a space distance where no insulator lies and a smaller creepage distance along the insulators, between first coil end 36A and second coil end 36B.

In contrast, referring to Fig. 12, in the present embodiment, second insulator 51 is provided to partially overlap with first insulator 48 when viewed in the radial direction of central axis 101. With such a configuration, in a portion of the coils from slot 24, an insulating layer formed of first insulator 48 and second insulator 51 that are continuous to each other is reliably arranged between first coil end 36A and second coil end 36B. This makes it possible to prevent the occurrence of a space distance between first coil end 36A and second coil end 36B and to ensure a sufficient creepage distance. Therefore, reliable insulation between first coil end 36A and second coil end 36B can be provided.

In addition, in the present embodiment, protruding length L1 of first insulator 48 on end face 26 is longer than protruding length L2 of third insulator 41 on end face 26. With such a configuration, it becomes easier to provide second insulator 51 to partially overlap with first insulator 48. Particularly, in the present embodiment, second insulator 51 is made of a flexible insulating paper, and further, first coil end 36A and second coil end 36B extend in the circumferential direction and the radial direction of the central axis adjacently to each other over the long section, which makes it difficult to provide second insulator 51 to partially overlap with first insulator 48. Even in such a case, the good operability when arranging second insulator 51 between first coil end 36A and second coil end 36B can be achieved because protruding length L1 of first insulator 48 on end face 26 is longer than protruding length L2 of third insulator 41 on end face 26.

The structure of motor 100 according to the embodiment of the present invention described above will be summarized as below. Motor 100 serving as a rotating electric machine according to the present embodiment includes: stator core 21 including yoke portion 22 having an annular shape, and a plurality of tooth portions 23 extending radially from yoke portion 22 and provided at a distance from each other in a circumferential direction, stator core 21 being provided with slot 24 between tooth portions 23 adjacent to each other; three-phase coils 31 including first coil end 36A and second coil end 36B arranged adjacently to each other on end face 26 of stator core 21 in an axial direction of stator core 21, and formed of coils of different phases, three-phase coils 31 being inserted through slot 24 and wound around each of tooth portions 23; first insulator 48 arranged in slot 24, protruding from slot 24 onto end face 26 of stator core 21, and partitioning a space in slot 24 into inner-circumferential-side space 61 and outer-circumferential-side space 62, inner-circumferential-side space 61 being a space where a first coil of three-phase coils 31 is arranged, outer-circumferential-side space 62 being a space where a second coil of three-phase coils 31 wound around tooth portion 23 at a position displaced from the first coil in the circumferential direction is arranged, outer-circumferential-side space 62 being located on a radially outer side of stator core 21 relative to inner-circumferential-side space 61; and second insulator 51 interposed between first coil end 36A and second coil end 36B, and provided to partially overlap with first insulator 48 when viewed in a radial direction of stator core 21.

Motor 100 according to the embodiment of the present invention configured as described above can provide reliable insulation between first coil end 36A and second coil end 36B formed of coils of different phases.

The present invention may be applied to a motor incorporated in a tool spindle and for rotating a tool held by the tool spindle. The present invention may be applied not only to a motor but also to a generator.

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

The present invention is applicable, for example, to a motor for a machine tool.

### REFERENCE SIGNS LIST

12 flange; 13 refrigerant passage forming portion; 14 resin sealing portion; 15 collar portion; 16 lead wire; 17 crossover wire; 20 stator; 21 stator core; 22 yoke portion; 23, 23P, 23Q tooth portion; 24 slot; 24p first wall portion; 24q second wall portion; 24r third wall portion; 26, 26m, 26n end face; 31 three-phase coil; 31U, 31V, 31W coil; 36 coil end portion; 36A first coil end; 36B second coil end; 37 root portion; 41 third insulator; 42, 49 protruding end; 46 fourth insulator; 48 first insulator; 51 second insulator; 52 peripheral edge portion; 61 inner-circumferential-side space; 62 outer-circumferential-side space; 100 motor; 101 central axis.

## Claims

1. A rotating electric machine comprising:
a stator core including
a yoke portion having an annular shape, and
a plurality of tooth portions extending radially from the yoke portion and provided at a distance from each other in a circumferential direction, the stator core being provided with a slot between the tooth portions adjacent to each other;
three-phase coils including a first coil end and a second coil end arranged adjacently to each other on an end face of the stator core in an axial direction of the stator core, and formed of coils of different phases, the three-phase coils being inserted through the slot and wound around each of the tooth portions;
a first insulator arranged in the slot, protruding from the slot onto the end face of the stator core, and partitioning a space in the slot into an inner-circumferential-side space and an outer-circumferential-side space, the inner-circumferential-side space being a space where a first coil of the three-phase coils is arranged, the outer-circumferential-side space being a space where a second coil of the three-phase coils wound around the tooth portion at a position displaced from the first coil in the circumferential direction is arranged, the outer-circumferential-side space being located on a radially outer side of the stator core relative to the inner-circumferential-side space; and
a second insulator interposed between the first coil end and the second coil end, and provided to partially overlap with the first insulator when viewed in a radial direction of the stator core.

2. The rotating electric machine according to claim 1, wherein
each of the first coil end and the second coil end includes a root portion arranged directly on an opening formed in the end face of the stator core by the slot,
the rotating electric machine further comprises a third insulator that covers the root portion, and
a length of the first insulator in the axial direction of the stator core on the end face of the stator core is longer than a length of the third insulator in the axial direction of the stator core on the end face of the stator core.

3. The rotating electric machine according to claim 1 or 2, wherein
the second insulator is made of an insulating paper.

4. The rotating electric machine according to any one of claims 1 to 3, wherein
each of the first coil end and the second coil end extends in the circumferential direction and the radial direction of the stator core when viewed in the axial direction of the stator core.
